# EUROPÄISCHE PATENTSCHRIFT

(11) **EP 1 022 755 B1**
(45) Veröffentlichungstag und Bekanntmachung des Hinweises auf die Patenterteilung: **24.01.2007**
(21) Anmeldenummer: 99811123.1
(22) Anmeldetag: 08.12.1999
(51) Int. Cl.: H01H 9/54, H02H 9/02, H01C 7/02

(54) **Strombegrenzender Schalter**
Current-limiting switch
Interrupteur limiteur de courant

(30) Priorität: 21.12.1998 EP 98811251
(43) Veröffentlichungstag der Anmeldung: 26.07.2000
(73) Patentinhaber: ABB Schweiz AG, 5400 Baden (CH)
(72) Erfinder: Fröhlich, Klaus, Prof. Dr., 5400 Baden (CH); Steurer, Michael, 1120 Wien (AT); Holaus, Walter, 3274 Aschau i.Z. (AT); Mendik, Michael, Dr., 8820 Wädenswill (CH); Kaltenegger, Kurt, Dr., 5426 Lengnau (CH)
(74) Vertreter: ABB Patent Attorneys

(56) Entgegenhaltungen:
- EP-A- 0 272 349
- DE-A- 4 317 965
- DE-A- 19 619 437
- BRICE C W ET AL: "REVIEW OF TECHNOLOGIES FOR CURRENT-LIMITING LOW-VOLTAGE CIRCUIT BREAKERS" 1995 IEEE INDUSTRIAL AND COMMERCIAL POWER SYSTEMS TECHNICAL CONFERENCE, SAN ANTONIO, MAY 7 - 11, 1995,7. Mai 1995 (1995-05-07), Seiten 41-47, XP000555150 INSTITUTE OF ELECTRICAL AND ELECTRONICS ENGINEERS

## Beschreibung

### TECHNISCHES GEBIET

Bei der Erfindung wird ausgegangen von einem strombegrenzenden Schalter nach dem Oberbegriff der Patentansprüche 1 und 4.

### STAND DER TECHNIK

Die Erfindung nimmt auf einen Stand der Technik von strombegrenzenden Schaltern bezug wie er etwa in Brice C. W. et al. "Review of technologies for current-limiting low-voltage circuit breakers" (1995 IEEE conference, San Antonio), in DE 43 17 965 A1 und EP 0 272 349 A1 beschrieben ist. Die vorbekannten Schalter sind zum Abschalten eines Netzzweiges ausgelegt und weisen einen sehr schnellen mechanischen Schalter mit galvanischen Kontakten, welche innerhalb einiger Mikrosekunden voneinander getrennt werden können, auf sowie parallel zum Schalter liegend einen Kommutierungspfad mit einem kurzschlusssstromunterbrechenden Halbleiterschalter, beispielsweise einen abschaltbaren Thyristor, wie vorzugsweise einen GTO. Beim Abschalten des Netzzweiges liegt die volle Netzspannung am Halbleiterschalter. Da der Halbleiterschalter allenfalls mit Spannungen bis zu wenigen kV belastbar ist, werden diese strombegrenzenden Schalter in Niederspannungsnetzen eingesetzt.

### KURZE DARSTELLUNG DER ERFINDUNG

Der Erfindung, wie sie in den Patentansprüchen angegeben ist, liegt die Aufgabe zugrunde, einen strombegrenzenden Schalter der eingangs genannten Art zu schaffen, welcher trotz einfachen Aufbaus ein sicheres und zuverlässiges Ab- und Zuschalten von Netzteilen auch von Hoch- und Mittelspannungsnetzen ermöglicht.

Der strombegrenzende Schalter nach der Erfindung weist neben einem ersten Kommutierungspfad mit einer stromunterbrechenden ersten Schaltvorrichtung und einer galvanisch oder elektronisch wirkenden Trennschaltstelle zusätzlich einen zweiten Kommutierungspfad mit einem Strombegrenzer auf. Der Strombegrenzer ist derart ausgebildet, dass von ihm geführter Strom, welcher beim Öffnen der ansteuerbaren Schaltvorrichtung vom ersten in den zweiten Kommutierungspfad kommutiert ist, zeitlich verzögert begrenzt wird. Während dieser Zeitverzögerung kann sich über den beiden Kommutierungspfaden keine Überspannung aufbauen und kann zugleich im ersten Kommutierungspfad über der Trennschaltstelle eine überspannungsfeste Trennstrecke gebildet werden. Dank dieser Trennstrecke ist es möglich, den strombegrenzenden Schalter auch für Nennspannungen weit über den maximal zulässigen Spannungen an der ersten Schaltvorrichtung, insbesondere Hoch- und Mittelspannungen, einzusetzen, ohne dass mehrere der der kostenintensiven ersten Schaltvorrichtungen in Serie geschaltet werden müssen.

### KURZE BESCHREIBUNG DER ZEICHNUNG

Bevorzugte Ausführungsbeispiele der Erfindung und die damit erzielbaren weiteren Vorteile werden nachfolgend anhand von Zeichnungen näher erläutert. Hierbei zeigt:
- Fig.1: eine einphasige Grundschaltung einer ein Mittelspannungsnetz nachbildenden Prüfvorrichtung mit einer ersten Ausführungsform des strombegrenzenden Schalters nach der Erfindung,
- Fig.2: ein Diagramm, in dem der Strom- und der Spannungsverlauf über dem strombegrenzenden Schalter beim Abschalten eines in der Prüfvorrichtung gemäss Fig.1 fliessenden Kurzschlussstroms in Funktion der Zeit dargestellt sind,
- Fig.3: eine einphasige Grundschaltung einer ein Mittelspannungsnetz nachbildenden Prüfvorrichtung mit einer zweiten Ausführungsform des strombegrenzenden Schalters nach der Erfindung, und
- Fig.4: in perspektivischer Ansicht einen als PTC-Widerstand ausgeführten Strombegrenzer der in den Figuren 1 und 3 dargestellten Ausführungsformen des strombegrenzenden Schalters nach der Erfindung.

### WEGE ZUR AUSFÜHRUNG DER ERFINDUNG

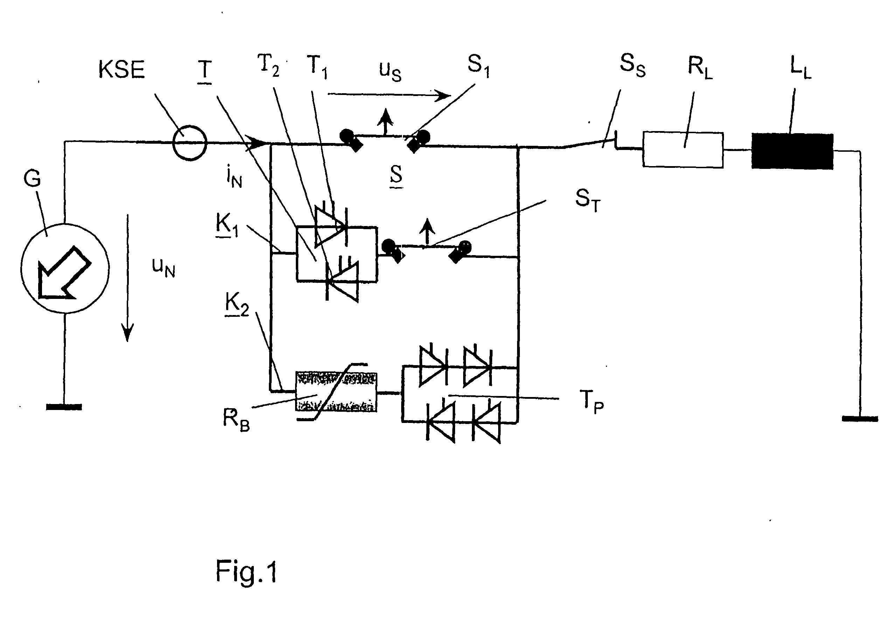

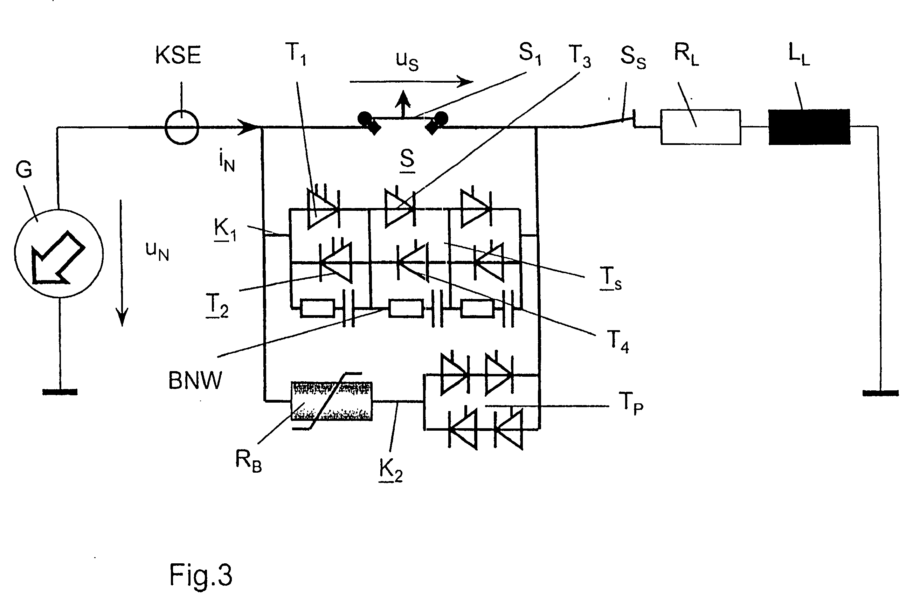

In allen Figuren beziehen sich gleiche Bezugszeichen auf gleichwirkende Teile. Die in den Figuren 1 und 3 dargestellten Schaltungen umfassen eine einphasige Grundschaltung einer ein Mittelspannungsnetz nachbildenden Prüfvorrichtung mit jeweils einem strombegrenzenden Schalter S. Die Prüfvorrichtung enthält einen eine Netzspannung u_{N} von typischerweise einigen 10 kV, beispielsweise 20 kV, nachbildenden Generator G, welcher über den strombegrenzenden Schalter eine durch einen ohmschen Widerstand R_{L} und eine Induktivität L_{L} nachgebildete Last speist. Eine zwischen Generator G und Schalter S angeordnete und auf den Schalter S wirkende Kurzschlusserkennungseinheit KSE weist ein Mess- und Auswerteteil zur sehr raschen Erkennung von Kurzschlussströmen iN auf. Die Kurzschlussströme liegen typischerweise bei einigen 10 kA, beispielsweise 20 kA. Der Schalter S weist im Strompfad vom Generator zur Last liegend eine sehr rasch, d.h. typischerweise innerhalb 100 bis 500 µs, beispielsweise 250 µs, öffnende lichtbogenfeste Nennstromkontaktanordnung S₁ auf, sowie einen in Serie dazu geschalteten Trennschalter S_{S}. Die lichtbogenfeste Kontaktanordnung S₁ kann lediglich eine Nennstromkontaktstelle umfassen, kann aber auch zwei oder mehr in Serie geschaltete Nennstromkontaktstellen enthalten.
Parallel zur Nennstromkontaktanordnung S₁ sind zwei Kommutierungspfade K₁ und K₂ geschaltet. Der Kommutierungspfad K₁ enthält eine elektrisch ansteuerbare Schaltvorrichtung T und eine Trennschaltstelle S_{T} (T_{S}). Die Schaltvorrichtung T ist mit Vorteil ein abschaltbarer Halbleiterschalter T₁, beispielsweise ein Thyristor, wie insbesondere ein GTO. Die Schaltvorrichtung T kann zu Zwecken einer hohen Stromtragfähigkeit anstelle eines Halbleiterschalters T₁ auch mehrere parallel geschaltete Halbleiterschalter enthalten. Um bei einem Wechselstrom sowohl bei negativer als auch bei positiver Polarität ein rasches Ansprechen der Schaltvorrichtung T zu erzielen, weist die Schaltvorrichtung einen oder mehrere weitere Halbleiterschalter T₂ auf, welche antiparallel zu dem einen oder den mehreren weiteren Halbleiterschaltern T₁ geschaltet sind.

Der Kommutierungspfad K₂ ist parallel zur Nennstromkontaktanordnung S₁ geschaltet und weist einen Strombegrenzer R_{B} auf. Der Strombegrenzer R_{B} spricht auf einen Kommutierungsstrom verzögert an und ist mit Vorteil als PTC-Widerstand ausgebildet. Eine in Serie zum Strombegrenzer R_{B} geschaltete Schaltvorrichtung T_{P} enthält mindestens einen, vorteilhafterweise jedoch zumindest zwei zueinander antiparallel geschaltete, Halbleiterschalter, welche nicht notwendigerweise abschaltbar ausgebildet sein müssen, jedoch einen von ihnen geführten Wechselstrom im Stromnulldurchgang löschen können, wie insbesondere Thyristoren oder Triacs. Durch Anordnung weiterer solcher Halbleiterschalter in Serie kann die dielektrische Belastbarkeit der Schaltvorrichtung T_{P} vergrössert werden. Anstelle von Halbleiterschaltern, kann die Schaltvorrichtung T_{P} auch mechanisch voneinander trennbare Kontakte enthalten.

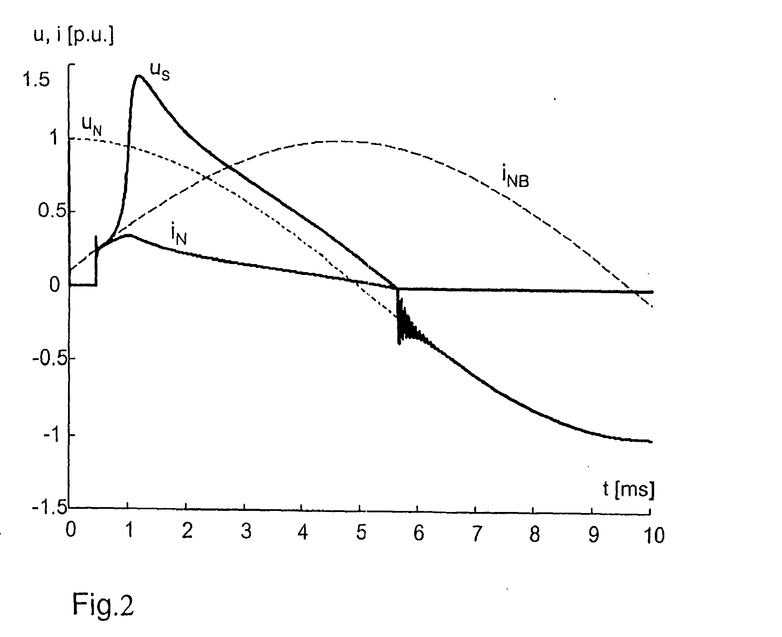

Die Wirkungsweise der strombegrenzenden Schalter nach den Figuren 1 und 3 wird nachfolgend anhand von Fig.2 näher erläutert.

Bei der Ausführungsform nach Fig.1 ist die im Kommutierungspfad K₁ in Serie zur Schaltvorrichtung T angeordnete Trennschaltstelle als rasch öffnende Trennkontaktanordnung S_{T} (Öffnungszeit typischerweise einige 100 µs) mit mechanisch voneinander trennbaren Kontakten ausgebildet. Beim Auftreten des Kurzschlussstromes i_{N} (ein nicht begrenzter Kurzschlussstrom i_{NB} ist in Fig.2 gestrichelt dargestellt) löst die Erkennungseinheit KSE am strombegrenzenden Schalter S innerhalb von etwa 100 µs einen Abschaltvorgang aus. Dabei werden sofort die in den beiden Kommutierungspfaden K₁ und K₂ liegenden Schaltvorrichtungen T und Tₚ leitfähig gemacht. Zugleich wird die Nennstromkontaktanordnung S₁ geöffnet. Bedingt durch den hierbei gebildeten Lichtbogen kommutiert der noch ansteigende Kurzschlussstrom innerhalb von etwa 250 µs in den Kommutierungspfad K₁. Dieser bleibt solange leitfähig bis über der Nennstromkontaktanordnung S₁ eine Spannungsfestigkeit erreicht wird, welche etwas grösser ist als die Spannungsfestigkeit von T. Der abzuschaltende Kurzschlussstrom kommutiert dann in den Kommutierungspfad K₂. Dabei entsteht sowohl eine transiente Überspannung auf Grund der Streuinduktivitäten als auch ein ohmscher Spannungsabfall am Strombegrenzer R_{B}. Der Strombegrenzer R_{B} begrenzt mit einer Verzögerung von einigen 100 µs. Diese Zeitverzögerung reicht aus, um die Nennstromkontaktanordnung S₁ und die Trennkontaktanordnung S_{T} praktisch leistungslos zu öffnen. Nach dem Öffnen der Trennkontaktanordnung S_{T} fällt im Kommutierungspfad K₁ praktisch die gesamte am Schalter S anstehende Spannung U_{S} über dieser Trennkontaktanordnung ab. Da der Strombegrenzer R_{B} verzögert anspricht, beginnt die Begrenzung des nun im Kommutierungspfad K₂ fliessenden Kurzschlussstroms erst nach dem Öffnen von S₁ und S_{T}. Der begrenzte Kurzschlusstrom kann beim folgenden Stromnulldurchgang, beispielsweise nach 5 bis 6 ms, durch die Schaltvorrichtung T_{P} mit sehr geringer Überspannung abgeschaltet werden. Danach wird durch Öffnen des Trennschalters S_{S} eine galvanische Trennstrecke hergestellt.

Eine betriebsmässige Abschaltung erfolgt ähnlich, lediglich die Kurvenform des Stromes bleibt annähernd sinusförmig, weil die Strombegrenzung nicht wirksam wird.

Beim Einschalten von Betriebsmitteln und Verbrauchern kann durch phasenrichtiges (synchrones) Schalten mit Hilfe der Halbleiterschalter der Schaltvorrichtung T_{P} das Auftreten von Ausgleichsvorgängen und damit verbundenen Überspannungen vermieden werden. Wird dabei auf einen Kurzschluss geschaltet, so wirkt die Begrenzung, weil ja bereits der Strombegrenzer R_{B} im Kurzschlusskreis liegt.
Danach wird der Einschaltantrieb von S₁ und S_{T} im Spannungsnulldurchgang der Netzspannung ausgelöst. Ein nach dieser Auslösung auftretender Kurzschlussstrom kann daher nur sehr langsam ansteigen und bis zum vollständigen Schliessen von S₁ und S_{T} keine unzulässig hohen Werte erreichen. Danach ist das System wieder im geschlossenen Ausgangszustand und für eine eventuelle Kurzschlussunterbrechung betriebsbereit.

Die Ausführungsform nach Fig.3 weist grundsätzlich die gleiche Wirkungsweise auf, jedoch ist die Trennschaltstelle nicht als Trennkontaktanordnung S_{T} sondern als eine von antiparallel geschalteten Halbleiterschaltern (T₃, T₄) gebildete Schaltvorrichtung T_{S} ausgebildet. Die Halbleiterschalter der Schaltvorrichtung T_{S} sind entsprechend den Halbleiterschaltern der Schaltvorrichtung T_{P} ausgebildet. Zusätzlich ist ein von RC-Gliedern gebildetes Beschaltungsnetzwerk BNW vorgesehen, welches parallel zur Nennstromkontaktanordnung S₁ und zur Serien-schaltung der Schaltvorrichtung T und der Trennkontaktanordnung T_{S} liegt. Dieses Beschaltungsnetzwerk dient zur Spannungssteuerung über den Halbleiterschaltern T₁ bis T₄. Dadurch können bewegte mechanische Teile eingespart werden.

Bei dieser Ausführungsform des strombegrenzenden Schalter gehen nach dem Abschalten von T, die Halbleiterschalter von T_{S} in den sperrenden Zustand über und die Spannung an der Serienschaltung dieser Ha!bleiterschalter teilt sich entsprechend dem Beschaltungsnetzwerk BNW auf. Wieder muss der Strombegrenzer R_{B} verzögert wirksam werden, damit die Freiwerdezeiten der Halbleiterschalter der Schaltvorrichtung T_{S} eingehalten, und die Spannungsfestigkeit der Nennstromkontaktanordnung S₁ erreicht werden können.

Die Einschaltung kann hier über die Schaltvorrichtungen T und T_{S} erfolgen, was eine geringere Beeinflussung des Netzstromes durch den Strombegrenzer R_{B} bewirkt. Wird dabei ein Kurzschluss von KSE erkannt, so bleibt das Schliessen von S₁ aus und der Kommutierungsvorgang von T₁ auf R_{B} wird unmittelbar eingeleitet.

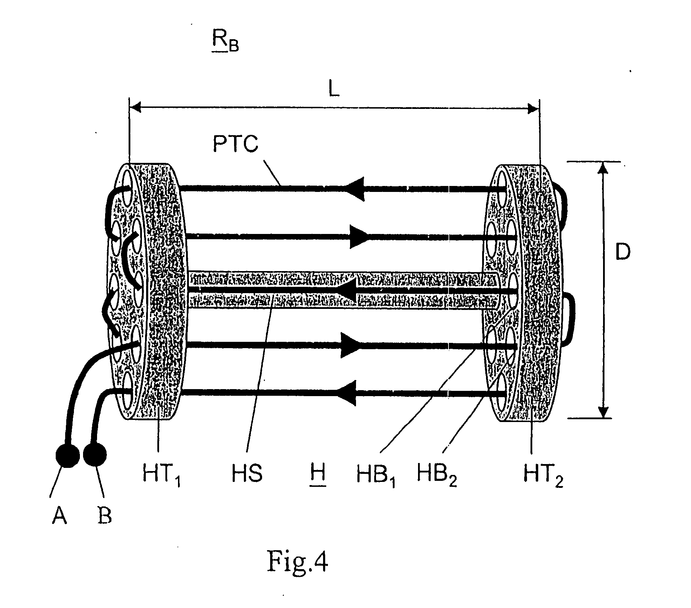

In Fig.4 ist ein Ausführungsbeispiel eines als Strombegrenzer R_{B} im Mittelspannungsbereich verwendeten PTC-Widerstands dargestellt. Dieser Widerstand weist einen axialsymmetrisch ausgebildeten Tragkörper H und einen nach Art eines Mäanders geführten Widerstandsdraht PTC aus einem PTC-Eigenschaften aufweisenden Material, z.B. Reinnickel oder Eisen-Kobalt-Legierungen, auf. Der Tragkörper H ist aus einem thermisch und dielektrisch hochwertigen Werkstoff, beispielsweise einem faserverstärktem Kunststoff, etwa auf der Basis Glasfaser und Epoxid, oder einer Keramik, gebildet und ist hantelförmig ausgeführt. Er weist an den Enden einer Stange HS angeordnete Tragscheiben HT₁, HT₂ auf. In die Tragscheiben sind Bohrungen, wie z.B. HB₁ und HB₂, eingeformt, welche jeweils der Führung eines axial ausgerichteten Abschnitts des Widerstandsdrahts PTC dienen. Die Bohrungen sind auf einem konzentrisch um die Stange HS geführten Kreis angeordnet. Durch zwei benachbarte Bohrungen, z.B. HB₁ und HB₂, ist jeweils eine Windung des Mäanders geführt ist. Die mäanderförmige Anordnung des Drahtes (paralleles Hin- und Rückführen des Drahtes) hält die Eigeninduktivität des Strombegrenzers R_{B} klein.

Wie zuvor in Zusammenhang mit den beiden Ausführungsformen des strombegrenzenden Schalters beschrieben wurde, wird mittels des abschaltbaren Halbleiterschalters T₁ oder T₂ (GTO) der abzuschaltende Kurzschlussstrom innerhalb weniger µs auf den als PTC-Widerstand ausgebildeten Strombegrenzer R_{B} kommutiert. Deshalb darf bei den zu schaltenden Strömen von bis zu einigen 10 kA und den zu diesem Zeitpunkt erst zulässigen Überspannungen von einigen kV die Eigeninduktivität (L_{E}) des Elements lediglich einige µH (<10 µH) betragen, was mit der beschriebenen Konstruktion selbst bei Abmessungen im Bereich von 90 cm Länge und 20 cm Durchmesser gewährleistet ist. Der streng axialsymmetrische Aufbau verhindert ausserdem das Auftreten unzulässig hoher Stromkräfte zwischen den Einzelleitern.

| Ausführungsbeispiel | |
|---|---|
| Ein ausgeführter PTC-Widerstand mit den Daten Widerstand bei Raumtemperatur R_{K} | 0.5 Ω |
| Widerstandshub (durch Eigenerwärmung innerhalb ca. 1 ms) R_{W}/R_{K} | ca.10 |
| Energieaufnahmevermögen (innerhalb ca. 5 ms) E | 0.1 MJ |
| Stromtragfähigkeit î | 10 kA |
| Spannungsfestigkeit (etwa Schaltstoss) û | 30 kV |
| Eigeninduktivität L_{E} hat die Abmessungen | 10 µH |
| Spulenlänge L | 0.9 m |
| Spulendurchmesser D | 0.2 m |
| Drahtquerschnitt (rund) | 1.9 mm² |
| Drahtlänge | 12.1 m |

Beim Strombegrenzer nach der Erfindung wird durch Serienschaltung der als Kommutierungselement wirkenden Schaltvorrichtung T mit der Trennkontaktanordnung S_{T} bzw. mit der Schaltvorrichtung T_{S} und durch Zusammenwirken dieser Serienschaltung mit dem verzögert wirkenden Strombegrenzer erreicht, dass die bei der Strombegrenzung auftretende Überspannung nicht oder nur zu einem Bruchteil (entsprechend der Spannungssteuerung durch das Beschaltungsnetzwerk BNW) an der Schaltvorrichtung T wirkt. Dies führt dazu, dass man auch bei Schaltsystemen für Nennspannungen weit über den maximal zulässigen Spannungen an den Halbleiterschaltern T₁ und T₂ keine Serienschaltung dieser relativ teuren Elemente benötigt. Der strombegrenzende Schalter nach der Erfindung stellt daher eine besonders kostengünstige Lösung vor allem im Bereich von Mittel- und Hochspannung dar.

Vorteilhaften Einsatz kann der strombegrenzende Schalter nach der Erfindung vor allem in dreiphasigen Energieübertragungssysteme als Ersatz für Leistungsschalter konventioneller Bauart überall dort finden, wo die Strombegrenzung im Kurzschlussfall und die Funktionalität der phasenrichtige Schalthandlungen notwendig bzw. vorteilhaft im Netzbetrieb sind.

Darüber hinaus kann der strombegrenzende Schalter nach der Erfindung auch als strombegrenzender Gleichstromschalter verwendet werden.

### Bezugszeichenliste

- A, B: Stromanschlüsse
- BNW: Beschaltungsnetzwerk
- H: Tragkörper
- HB₁, HB₂: Bohrungen
- HS: Stange
- HT₁, HT₂: Tragscheiben
- K₁, K₂: Kommutierungspfade
- KES: Kurzschlusserkennungseinheit
- L_{L}: Induktivität
- PTC: Widerstandsdraht
- R_{L}: ohmschen Widerstand
- R_{B}: Strombegrenzer
- S: strombegrenzender Schalter
- S₁: Nennstromkontaktanordnung
- S_{S}: Trennschalter
- S_{T}: Trennkontaktanordnung
- T_{1,} T₂: Halbleiterschalter
- T, T_{P}, T_{S}: Schaltvorrichtungen
- i_{N}: Kurzschlussstrom
- i_{NB}: nicht begrenzter Kurzschlussstrom
- u_{N}: Netzspannung
- u_{S}: am Schalter S anstehende Spannung

## Patentansprüche

1. Strombegrenzender Mittel- oder Hochspannungsschalter mit einer zur Aufnahme von Nennstrom bestimmten lichtbogenfesten Kontaktanordnung (S₁) und mit einem parallel zur Nennstromkontaktanordnung (S₁) geschalteten ersten Kommutierungspfad (K₁) mit einer stromunterbrechenden ersten Schaltvorrichtung (T), **dadurch gekennzeichnet, dass** parallel zur Nennstromkontaktanordnung (S₁) ein zweiter Kommutierungspfad (K₂) mit einem verzögert auf den von ihm geführten Kommutierungsstrom ansprechenden Strombegrenzer (R_{B}) geschaltet ist, und dass der erste Kommutierungspfad (K₁) in Serie geschaltet die erste Schaltvorrichtung (T) und eine Trennkontaktanordnung (S_{T}) aufweist.

2. Schalter nach Anspruch 1, **dadurch gekennzeichnet, dass** die erste Schaltvorrichtung (T) einen ersten abschaltbaren Halbleiterschalter (T₁) enthält.

3. Schalter nach Anspruch 2, **dadurch gekennzeichnet, dass** die erste Schaltvorrichtung (T) einen zweiten abschaltbaren Halbleiterschalter (T₂) aufweist, welcher antiparallel zum ersten Halbleiterschalter (T₁) geschaltet ist.

4. Strombegrenzender Mittel- oder Hochspannungsschalter mit einer zur Aufnahme von Nennstrom bestimmten lichtbogenfesten Kontaktanordnung (S₁) und mit einem parallel zur Nennstromkontaktanordnung (S₁) geschalteten ersten Kommutierungspfad (K₁) mit einer stromunterbrechenden ersten Schaltvorrichtung (T), **dadurch gekennzeichnet, dass** parallel zur Nennstromkontaktanordnung (S₁) ein zweiter Kommutierungspfad (K₂) mit einem verzögert auf den von ihm geführten Kommutierungsstrom ansprechenden Strombegrenzer (R_{B}) geschaltet ist, und dass die erste Schaltvorrichtung (T) mehrere in Serie geschaltete erste Halbleiterschalter (T₁, T₃), von denen mindestens einer (T₁) abschaltbar ausgebildet ist, sowie ein parallel zu den ersten Halbleiterschaltern geschaltetes Beschaltungsnetzwerk (BNW) enthält.

5. Schalter nach Anspruch 4, **dadurch gekennzeichnet, dass** die erste Schaltvorrichtung (T) zweite Halbleiterschalter (T₂, T₄) aufweist, welche antiparallel zu den ersten Halbleiterschaltern (T₁, T₃) und zum Beschaltungsnetzwerk (BNW) geschaltet sind.

6. Schalter nach einem der Ansprüche 1 bis 5, **dadurch gekennzeichnet, dass** in Serie zum Strombegrenzer (R_{B}) eine zweite Schaltvorrichtung (T_{P}) geschaltet ist.

7. Schalter nach einem der Ansprüche 1 bis 6, **dadurch gekennzeichnet, dass** der Strombegrenzer (R_{B}) einen PTC-Widerstand enthält.

8. Schalter nach Anspruch 7, **dadurch gekennzeichnet, dass** der PTC-Widerstand einen im wesentlichen axialsymmetrisch ausgebildeten Tragkörper (HK) und einen nach Art eines Mäanders geführten Widerstandsdraht (PTC) aus einem PTC-Eigenschaften aufweisenden Material aufweist.

9. Schalter nach Anspruch 8 , **dadurch gekennzeichnet, dass** der Tragkörper (HK) hantelförmig ausgebildet ist und an den Enden einer axial geführten Stange (HS) angeordnete Tragscheiben (HT₁, HT) aufweist.

10. Schalter nach Anspruch 9, **dadurch gekennzeichnet, dass** in die Tragscheiben Bohrungen (HB₁, HB₂) eingeformt sind, welche jeweils der Führung eines axial ausgerichteten Abschnitts des Widerstandsdrahts (PTC) dienen.

11. Schalter nach Anspruch 10, **dadurch gekennzeichnet, dass** die Bohrungen (HB₁, HB₂) auf einem konzentrisch um die Stange (HS) geführten Kreis angeordnet sind, und dass durch zwei benachbarte Bohrungen (HB₁, HB₂) jeweils eine Windung des Mäanders geführt ist.

## Claims

1. Current-limiting medium- or high-voltage switch having an arc-resistant contact arrangement (S₁), which is intended to take up rated current, and having a first commutation path (K₁), which is connected in parallel with the rated current contact arrangement (S₁) and has a current-interrupting first switching device (T), **characterized in that** a second commutation path (K₂) having a current limiter (R_{B}), which responds in a delayed fashion to the commutation current that it carries, is connected in parallel with the rated current contact arrangement (S₁), and **in that** the first commutation path (K₁) has, connected in series, the first switching device (T) and an isolating contact arrangement (S_{T}).

2. Switch according to Claim 1, **characterized in that** the first switching device (T) contains a first turn-off semiconductor switch (T₁).

3. Switch according to Claim 2, **characterized in that** the first switching device (T) has a second turn-off semiconductor switch (T₂), which is reverse-connected in parallel with the first semiconductor switch (T₁).

4. Current-limiting medium- or high-voltage switch having an arc-resistant contact arrangement (S₁), which is intended to take up rated current, and having a first commutation path (K₁), which is connected in parallel with the rated current contact arrangement (S₁) and has a current-interrupting first switching device (T), **characterized in that** a second commutation path (K₂) having a current limiter (R_{B}), which responds in a delayed fashion to the commutation current that it carries, is connected in parallel with the rated current contact arrangement (S₁), and **in that** the first switching device (T) contains a plurality of series-connected first semiconductor switches (T₁, T₃), at least one (T₁) of which is designed to be a turn-off switch, and also a snubber network (BNW) connected in parallel with the first semiconductor switches.

5. Switch according to Claim 4, **characterized in that** the first switching device (T) has two semiconductor switches (T₂, T₄), which are reverse-connected in parallel with the first semiconductor switches (T₁, T₃) and with the snubber network (BNW).

6. Switch according to one of Claims 1 to 5, **characterized in that** a second switching device (T_{P}) is connected in series with the current limiter (R_{B}).

7. Switch according to one of Claims 1 to 6, **characterized in that** the current limiter (R_{B}) contains a PTC thermistor.

8. Switch according to Claim 7, **characterized in that** the PTC thermistor has a supporting body (HK) designed to be essentially axially symmetrical and a resistive wire (PTC) which is guided in a meandering manner and is made of a material having PTC properties.

9. Switch according to Claim 8, **characterized in that** the supporting body (HK) is designed to be dumbbell-shaped and has supporting discs (HT₁, HT) arranged at the ends of an axially guided rod (HS).

10. Switch according to Claim 9, **characterized in that** holes (HB₁, HB₂) are made in the supporting discs and each serve for guiding an axially aligned section of the resistive wire (PTC).

11. Switch according to Claim 10, **characterized in that** the holes (HB₁, HB₂) are arranged on a circle guided concentrically around the rod (HS), and **in that** one turn of the meander is in each case guided through two neighbouring holes (HB₁, HB₂).

## Revendications

1. Commutateur à moyenne ou haute tension limiteur de courant comprenant un arrangement de contact (S₁) résistant aux arcs conçu pour absorber un courant nominal et comprenant une première branche de commutation (K₁) branchée en parallèle avec l'arrangement de contact pour courant nominal (S₁) et comprenant un premier dispositif de commutation (T) interrompant le courant, **caractérisé en ce qu'**une deuxième branche de commutation (K₂) comprenant un limiteur de courant (R_{B}) réagissant en retard au courant de commutation qui lui est acheminé est branchée en parallèle avec l'arrangement de contact pour courant nominal (S₁) et que la première branche de commutation (K₁) présente le premier dispositif de commutation (T) et un arrangement de contact de sectionnement (S_{T}) branchés en série.

2. Commutateur selon la revendication 1, **caractérisé en ce que** le premier dispositif de commutation (T) contient un premier commutateur à semiconducteur désactivable (T₁).

3. Commutateur selon la revendication 2, **caractérisé en ce que** le premier dispositif de commutation (T) présente un deuxième commutateur à semiconducteur désactivable (T₂) qui est branché en antiparallèle avec le premier commutateur à semiconducteur (T₁).

4. Commutateur à moyenne ou haute tension limiteur de courant comprenant un arrangement de contact (S₁) résistant aux arcs conçu pour absorber un courant nominal et comprenant une première branche de commutation (K₁) branchée en parallèle avec l'arrangement de contact pour courant nominal (S₁) et comprenant un premier dispositif de commutation (T) interrompant le courant, **caractérisé en ce qu'**une deuxième branche de commutation (K₂) comprenant un limiteur de courant (R_{B}) réagissant en retard au courant de commutation qui lui est acheminé est branchée en parallèle avec l'arrangement de contact pour courant nominal (S₁) et que le premier dispositif de commutation (T) comprend plusieurs premiers commutateurs à semiconducteur (T₁, T₃) branchés en série, dont au moins un (T₁) est désactivable, ainsi qu'un réseau de connexion (BNW) branché en parallèle avec les premiers commutateurs à semiconducteur.

5. Commutateur selon la revendication 4, **caractérisé en ce que** le premier dispositif de commutation (T) présente des deuxièmes commutateurs à semiconducteur (T₂, T₄) qui sont branchés en antiparallèle avec les premiers commutateurs à semiconducteur (T₁, T₃) et avec le réseau de connexion (BNW).

6. Commutateur selon l'une des revendications 1 à 5, **caractérisé en ce qu'**un deuxième dispositif de commutation (T_{P}) est branché en série avec le limiteur de courant (R_{B}).

7. Commutateur selon l'une des revendications 1 à 6, **caractérisé en ce que** le limiteur de courant (R_{B}) contient une résistance CTP.

8. Commutateur selon la revendication 7, **caractérisé en ce que** la résistance CTP présente un corps porteur (HK) à la forme essentiellement à symétrie axiale et un fil résistif (PTC) posé à la manière d'un méandre et réalisé dans un matériau présentant des propriétés CTP.

9. Commutateur selon la revendication 8, **caractérisé en ce que** le corps porteur (HK) est en forme d'haltère et présente des disques porteurs (HT₁, HT) aux extrémités d'une tige (HS) dirigée dans le sens axial.

10. Commutateur selon la revendication 9, **caractérisé en ce que** dans les disques porteurs sont façonnés des alésages (HB₁, HB₂) qui servent respectivement au guidage d'une section dirigée dans le sens axial du fil résistif (PTC).

11. Commutateur selon la revendication 10, **caractérisé en ce que** les alésages (HB₁, HB₂) sont disposés sur un cercle disposé de manière concentrique autour de la tige (HS) et qu'une spire du méandre passe à chaque fois à travers deux alésages (HB₁, HB₂) voisins.
